# EUROPÄISCHE PATENTANMELDUNG

(11) **EP 2 412 418 A1**
(43) Veröffentlichungstag der Anmeldung: **01.02.2012**
(21) Anmeldenummer: 10170867.5
(22) Anmeldetag: 27.07.2010
(51) Int. Cl.: B01D 33/80, B01D 33/00

(54) **Verfahren und Vorrichtung zur Steuerung und/oder Regelung einer Filtrationsanlage**

(71) Anmelder: Siemens Aktiengesellschaft, 80333 München (DE)
(72) Erfinder: Lekscha, Andreas, 90455, Nürnberg (DE); Zehentbauer, Bernd, 91052, Erlangen (DE)

(57) **Zusammenfassung**

Die Erfindung betrifft ein Verfahren und eine Vorrichtung zur Steuerung und/oder Regelung einer Filtrationsanlage (1) umfassend mindestens einen Vakuumfilter (1c), mindestens eine Vakuumpumpe (10) und mindestens eine Filterwanne (1a), mittels welcher ein zu filtrierendes Medium (M) umfassend Feststoffpartikel (FP) und Flüssigkeit (FL) in ein überwiegend Feststoffpartikel (FP) enthaltendes Konzentrat (1f) und ein überwiegend Flüssigkeit (FL) enthaltendes Filtrat getrennt wird, umfassend folgende Schritte:
- Ermittlung mindestens eines ersten Parameters der Filtrationsanlage (1) in Form einer Restfeuchtigkeit (w) des Konzentrats (1f) und/oder einer Dichte des Filtrats in Abhängigkeit von einer Zeit t oder mindestens einem zweiten Parameter der Filtrationsanlage (1),
- Bilden einer Ableitung des mindestens einen ersten Parameters nach der Zeit t oder dem mindestens einen zweiten Parameter als mindestens eine erste Kenngröße,
- Ermitteln des Vorzeichens der mindestens einen ersten Kenngröße, und
- Steuern und/oder Regeln der Filtrationsanlage (1) in Abhängigkeit des ermittelten Vorzeichens.

## Beschreibung

Die Erfindung betrifft ein Verfahren und eine Vorrichtung zur Steuerung und/oder Regelung einer Filtrationsanlage umfassend mindestens einen Vakuumfilter, mindestens eine Vakuumpumpe und mindestens eine Filterwanne, wobei mittels der Filtrationsanlage ein zu filtrierendes Medium umfassend Feststoffpartikel und Flüssigkeit in ein überwiegend Feststoffpartikel enthaltendes Konzentrat und ein überwiegend Flüssigkeit enthaltendes Filtrat getrennt wird.

Die Filtration ist ein mechanisches Verfahren zur Trennung eines Mediums umfassend Feststoff und ein Fluid. Das Endprodukt des Filtrationsprozesses ist ein auf einem Filter zurückgehaltenes Konzentrat bzw. ein sogenannter Filterkuchen.

In der Bergbauindustrie ist die Filtration der wichtigste Prozess zur Entwässerung eines Mediums bzw. einer Suspension umfassend Feststoff und Flüssigkeit, wie beispielsweise einer Pulpe umfassend Wasser und Gesteinspartikel, um ein Endprodukt in Form eines feuchten Konzentrats bzw. eines Filterkuchens herzustellen. Die nach der Filtration vorliegende Restfeuchtigkeit des Konzentrats bzw. Filterkuchens soll hierbei möglichst gering sein und bildet ein wichtiges Qualitätskriterium.

Filtrationsanlagen werden nach der Bauart des eingesetzten Filters unterteilt. Dabei gibt es zwei Bauarten von Filtern und dementsprechend von Anlagen, die in der Bergbauindustrie, insbesondere der Erzaufbereitungsindustrie, Anwendung finden. Es handelt sich dabei um Pressfiltrationsanlagen einerseits und Vakuumfiltrationsanlagen andererseits.

Eine Vakuumfiltrationsanlage umfasst dabei eine Anzahl an Vakuumfiltern, insbesondere in Form von rotierenden Vakuumscheibenfiltern, Vakuumbandfiltern oder Vakuumtrommelfiltern, die bereichsweise in eine Filterwanne eintauchen angeordnet sind, in der sich zu filtrierendes Medium befindet.

Die Filtration ist ein sehr aufwendiger und daher kostenintensiver Prozess, der aufgrund diverser Einflussgrößen nur schwer automatisierbar ist. Insbesondere der Prozess der Vakuumfiltration ist aufgrund des erforderlichen Einsatzes von Vakuumpumpen sehr energieintensiv.

Um fortwährend eine gewünschte Restfeuchtigkeit im Endprodukt bzw. Filterkuchen bei gleichzeitig konstant vorgegebenem Durchsatz an zu filtrierendem Medium zu erreichen, werden Filtrationsanlagen häufig überdimensioniert ausgelegt. Das erhöht jedoch die Investitions- und Betriebskosten.

Ein Problem bei der Automatisierung des Filtrationsprozesses ist insbesondere dadurch gegeben, dass eine ungleichmäßige oder schwankende Feuchtigkeit des zu filtrierenden Mediums den Prozess beeinflusst.

Die Vakuumfilter einer Vakuumfilteranlage werden üblicherweise blockweise, d.h. parallel geschaltet, betrieben und automatisch gesteuert. Eine klassische Methode zur automatischen Steuerung eines Blocks an Vakuumfiltern beinhaltet, dass eine Drehzahl eines jeden Vakuumfilters sowie ein Verbrauch an zu filtrierendem Medium eines jeden Vakuumfilters in Abhängigkeit vom Gesamtverbrauch an zu filtrierendem Medium pro Block geregelt wird. Die Anzahl der sich in Betrieb befindlichen Vakuumfilter sowie ein Füllstand an Medium in einer Filterwanne, aus der ein jeder Vakuumfilter mit zu filtrierendem Medium versorgt wird, werden bei der Regelung korrigierend berücksichtigt. Diese Verfahrensweise berücksichtigt aber weder Änderungen der Feuchtigkeit des zu filtrierenden Mediums oder des Endprodukts, noch Verluste von Feststoff im Filtrat, und ist daher nicht ausreichend effektiv.

Weitere bisher verwendete Verfahren zur automatischen Steuerung einer Filtrationsanlage basieren auf einer Ermittlung von den Filtrationsprozess charakterisierenden Kenngrößen, einer Ermittlung eines Werts der Ableitung eines oder mehrerer Kenngrößen, und einer Regelung des Prozesses in Abhängigkeit dieses Werts der Ableitung(en). Dabei erfolgt, wie oben bereits dargestellt, die Steuerung einer Scheiben-, Band-oder Trommelgeschwindigkeit der Vakuumfilter in Abhängigkeit von der Gesamtbelastung der Filtrationsanlage und einem Füllstand an zu filtrierendem Medium in der Filterwanne. Es wird ein Wert der Ableitung des Füllstandes nach der Zeit gebildet, wobei die Anzahl an sich in Betrieb befindlichen Vakuumfiltern, die erreichte Filterkuchendicke und die Filtratdichte des gebildeten Filtrats berücksichtigt werden. Nachteilig bei dieser Verfahrensweise ist, dass eine minimale Restfeuchtigkeit im Konzentrat bzw. Filterkuchen nicht mit einem Minimum an Energie für den Betrieb der Filtrationsanlage erreichbar ist.

Eine ebenfalls bereits eingesetzte Fuzzylogik oder aufwendige statistische Modelle berechnen aufgrund der sich in der Praxis ständig verändernden Feuchtigkeit des zu filtrierenden Mediums permanent neue Einstellungsvorgaben für die Filtrationsanlage, wobei der Durchsatz an Medium sinkt, der Energiebedarf sich erhöht und zudem die Qualität des Endprodukts vermindert wird. Diese bisher eingesetzte Steuerung ist somit aufwendig und führt dennoch nicht zu optimalen Ergebnissen.

Die US 3,960,726 beschreibt eine Filtrationsanlage mit einem Vakuumfilter, bei der eine Regelung des Füllstands in einer Filterwanne sowie der Drehzahl des Vakuumfilters durchgeführt wird.

Die US 3,672,067 beschreibt ein Verfahren zur Dampftrocknung eines Filterkuchens, wobei während der Bildung des Filterkuchens eine Regelung des Vakuums in einem mit konstanter Drehzahl rotierenden Vakuumfilter erfolgt.

Die US 3,744,543 offenbart ebenfalls ein Verfahren zur Dampftrocknung eines Filterkuchens, wobei während der Bildung des Filterkuchens eine Regelung des Vakuums und der Drehzahl des Vakuumfilters erfolgt.

Die deutsche Offenlegungsschrift Nr. 26 06 514 beschreibt ein Verfahren und eine Vorrichtung zum Entwässern eines Staubaufschlämmungsgemisches. Dabei wird die Menge an gebildetem Filterkuchen überwacht und zur Regulierung der Austragsrate aus dem Filter eingesetzt.

Die SU 1604416 A beschreibt eine automatische Steuerung eines Vakuumfilters, wobei eine Überwachung des Filtergewebes erfolgt. Es wird die Feuchtigkeit des Filterkuchens, die Dichte des zu filtrierenden Mediums, der Filtratablauf und die Filtratdichte überwacht.

Die SU 691156 A beschreibt eine automatische Steuerung eines Vakuumscheibenfilters, wobei die Drehzahl des Scheibenfilters in Abhängigkeit von der Feuchtigkeit des Filterkuchens verändert wird.

Die SU 1713617 A1 offenbart eine automatische Steuerung eines industriellen Vakuumfilters. Dabei wird die Dichte des zu filtrierenden Mediums, das Gewicht des Filterkuchens sowie das Filtrat überwacht, um die Feuchtigkeit des Filterkuchens konstant zu halten.

Die SU 1713618 A1 beschreibt eine automatische Steuerung von Vakuumfiltern, wobei eine Bandfiltergeschwindigkeit in Abhängigkeit von der Feuchtigkeit des Filterkuchens geregelt wird.

Die SU 1725971 A1 beschreibt eine automatische Steuerung für einen Entwässerungsvorgang einer Suspension in einem Vakuumfilter, wobei die Restfeuchtigkeit des Filterkuchens, die Dichte der zu filtrierenden Suspension und die Filterproduktivität mittels Sensoren gemessen werden.

Die SU 601029 A1 beschreibt ein Verfahren zum Entwässern einer Suspension mittels eines Vakuumfilters, wobei zur Konstanthaltung der Feuchtigkeit im Filterkuchen die Dichte der zu entwässernden Suspension, eine Wasserzugabe, die Drehzahl des Vakuumfilters das Vakuum im Vakuumfilter und ein Dampfverbrauch überwacht werden.

Die SU 665930 A beschreibt eine automatische Steuerung eines Trennprozesses zum Trennen einer Suspension in einem Vakuumfilter, wobei die Rotationsgeschwindigkeit des Vakuumfilters in Abhängigkeit von der Feuchtigkeit des gebildeten Filterkuchens geregelt wird.

Es ist Aufgabe der Erfindung, ein Verfahren zur Steuerung und/oder Regelung einer Filtrationsanlage umfassend mindestens einen Vakuumfilter anzugeben, mit dem eine weitgehend konstante, minimale Restfeuchtigkeit im Endprodukt, bzw. Konzentrat oder Filterkuchen, bei minimalem Energieeinsatz erzielbar ist.

Die Aufgabe wird für das Verfahren zur Steuerung und/oder Regelung einer Filtrationsanlage umfassend mindestens einen Vakuumfilter, mindestens eine Vakuumpumpe und mindestens eine Filterwanne, mittels welcher ein zu filtrierendes Medium umfassend Feststoffpartikel und Flüssigkeit in ein überwiegend Feststoffpartikel enthaltendes Konzentrat und ein überwiegend Flüssigkeit enthaltendes Filtrat getrennt wird, umfassend folgende Schritte gelöst:
- Ermittlung mindestens eines ersten Parameters der Filtrationsanlage in Form einer Restfeuchtigkeit des Konzentrats und/oder einer Dichte des Filtrats in Abhängigkeit von einer Zeit t oder mindestens einem zweiten Parameter der Filtrationsanlage,
- Bilden einer Ableitung des mindestens einen ersten Parameters nach der Zeit t oder dem mindestens einen zweiten Parameter als mindestens eine erste Kenngröße,
- Ermitteln des Vorzeichens der mindestens einen ersten Kenngröße, und
- Steuern und/oder Regeln der Filtrationsanlage in Abhängigkeit des ermittelten Vorzeichens.

Die Aufgabe wird für die erfindungsgemäße Vorrichtung zur Durchführung des erfindungemäßen Verfahrens gelöst, indem diese Folgendes umfasst:
- Eine Filtrationsanlage zur Trennung eines zu filtrierenden Mediums umfassend Feststoffpartikel und Flüssigkeit in ein überwiegend Feststoffpartikel enthaltendes Konzentrat und ein überwiegend Flüssigkeit enthaltendes Filtrat, umfassend mindestens einen Vakuumfilter, mindestens eine Vakuumpumpe und mindestens eine Filterwanne zur Aufnahme von zu filtrierendem Medium,
- mindestens eine erste Einrichtung zur Ermittlung mindestens eines ersten Parameters der Filtrationsanlage in Form einer Restfeuchtigkeit des Konzentrats und/oder einer Dichte des Filtrats in Abhängigkeit von der Zeit t oder dem mindestens einen zweiten Parameter,
- mindestens eine Recheneinheit zum Bilden einer Ableitung des mindestens einen ersten Parameters nach der Zeit t oder dem mindestens einen zweiten Parameter als mindestens eine erste Kenngröße und zum Ermitteln des Vorzeichens der mindestens einen ersten Kenngröße, und
- mindestens eine, mit der mindestens einen Recheneinheit verbundene Steuer- und/oder Regeleinheit zum Steuern und/oder Regeln der Filtrationsanlage in Abhängigkeit des ermittelten Vorzeichens.

Das erfindungsgemäße Verfahren und die erfindungsgemäße Vorrichtung stellen eine innovative Möglichkeit bereit, eine Filtrationsanlage umfassend mindestens einen Vakuumfilter derart zu betreiben, wobei fortwährend ein Konzentrat bzw. ein Filterkuchen mit minimaler Restfeuchtigkeit bei gleichzeitig minimalem Energieverbrauch hergestellt werden kann.

Für das Verfahren ist es von Vorteil, den mindestens einen zweiten Parameter aus der Gruppe umfassend eine Dichtes 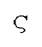 des zu filtrierenden Mediums, einen Druck p im Vakuumfilter, eine Drehzahl n des Vakuumfilters, eine Temperatur T im Bereich des Vakuumfilters, eine Dicke d des Konzentrats, eine maximale Betriebsdauer eines Filtergewebes des Vakuumfilters, eine spezifische Filterleistung g, und einen Füllstand h an zu filtrierendem Medium in der Filterwanne auszuwählen. Aber auch andere zweite Parameter, wie eine Pumpenleistung der mindestens einen Vakuumpumpe, eine Dichte des Filtrats usw. können gewählt werden, sofern diese sich vom ersten Parameter unterscheiden.

Die Dichtemessung am zu filtrierenden Medium kann dabei in der Filterwanne oder in einer Zuführung für das Medium zur Filterwanne erfolgen.

Eine Temperaturmessung zur Bestimmung einer Temperatur T erfolgt bevorzugt in einem Gas- oder Dampfraum, der sich in Kontakt zum auf dem Filtergewebe des Vakuumfilters gebildeten Konzentrat befindet, sobald das Konzentrat aus dem zu filtrierenden Medium austritt oder auftaucht.

Die spezifische Filterleistung (beispielsweise in 1/min je m² an Filterfläche) wird durch die pro Zeiteinheit verarbeitete Menge an zu filtrierendem Medium bezogen auf eine bestimmte Flächeneinheit des Filtergewebes bestimmt. Die pro Zeiteinheit verarbeitete Menge an Medium ist über eine Messung des Füllstands in der Filterwanne über die Zeit und die Messung der zugeführten Menge an Medium in die Filterwanne über die Zeit in Kenntnis der vorhandenen Fläche an Filtergewebe errechenbar.

Es ist von Vorteil, wenn bei dem Verfahren in einem ersten Regelkreis mindestens ein erster Parameter der Filtrationsanlage in Form der Restfeuchtigkeit des Konzentrats über die Zeit t ermittelt wird, daraus die erste Kenngröße und ihr Vorzeichen ermittelt werden, eine Ermittlung der Dichte des zu filtrierenden Mediums in Abhängigkeit der Zeit t erfolgt und eine Ableitung der Dichte des zu filtrierenden Mediums in Abhängigkeit der Zeit t als mindestens eine zweite Kenngröße gebildet wird, wobei bei jeweils positivem Vorzeichen der ersten Kenngröße und der zweiten Kenngröße die Dichte des zu filtrierenden Mediums erhöht und bei jeweils negativem Vorzeichen der ersten Kenngröße und der zweiten Kenngröße die Dichte des zu filtrierenden Mediums vermindert wird.

Die Filtrationsanlage der Vorrichtung umfasst dazu vorzugsweise mindestens eine erste Dosiereinrichtung zur Dosierung eines Rohmediums umfassend Flüssigkeit und Feststoffpartikel und mindestens eine zweite Dosiereinrichtung zur Zugabe von weiterer Flüssigkeit zum Rohmedium, weiterhin eine erste Messeinrichtung zur Erfassung der Dichte des aus dem Rohmedium und gegebenenfalls der weiteren Flüssigkeit gebildeten zu filtrierenden Mediums, wobei die mindestens eine Steuer-und/oder Regeleinheit eingerichtet ist, die Dichte des Mediums gemäß einer Vorgabe der mindestens einen Recheneinheit durch Steuerung und/oder Regelung der mindestens einen ersten Dosiereinrichtung und/oder der mindestens einen zweiten Dosiereinrichtung zu verändern.

Alternativ oder in Kombination zum ersten Regelkreis wird weiterhin bevorzugt in einem zweiten Regelkreis mindestens ein erster Parameter der Filtrationsanlage in Form der Restfeuchtigkeit des Konzentrats in Abhängigkeit von einem zweiten Parameter in Form des Drucks im Vakuumfilter ermittelt, daraus die oder eine weitere erste Kenngröße und ihr Vorzeichen ermittelt, und bei positivem Vorzeichen der bzw. der weiteren ersten Kenngröße eine Pumpleistung der mindestens einen Vakuumpumpe erhöht und bei negativem Vorzeichen vermindert.

Die Filtrationsanlage der Vorrichtung umfasst dazu bevorzugt eine zweite Messeinrichtung zur Erfassung des Drucks im mindestens einen Vakuumfilter, wobei die mindestens eine Steuer-und/oder Regeleinheit eingerichtet ist, die Pumpleistung der mindestens einen Vakuumpumpe gemäß einer Vorgabe der mindestens einen Recheneinheit zu verändern.

Es hat sich bewährt, wenn das auf dem Filtergewebe des Vakuumfilters gebildete Konzentrat mit Wasserdampf beaufschlagt wird und weiterhin die Temperatur T in einem Dampfraum über dem Konzentrat gemessen und durch Erhöhung oder Verringerung einer zugeführten Wasserdampfmenge geregelt wird. Der Wasserdampf wird durch das Konzentrat und das Filtergewebe gesogen und drückt dabei Flüssigkeit aus dem im Konzentrat enthaltenen offenen Porenraum.

Alternativ oder in Kombination zum ersten und/oder zweiten Regelkreis wird vorzugsweise in einem dritten Regelkreis mindestens ein erster Parameter der Filtrationsanlage in Form der Restfeuchtigkeit des Konzentrats in Abhängigkeit von der Temperatur T ermittelt wird, daraus die oder eine weitere erste Kenngröße und ihr Vorzeichen ermittelt werden, und wobei bei positivem Vorzeichen der oder der weiteren ersten Kenngröße die Temperatur T erhöht und bei negativem Vorzeichen die Temperatur T vermindert wird.

Die Filtrationsanlage der Vorrichtung umfasst dazu insbesondere mindestens eine Dampfzuführeinrichtung zur Bedampfung des gebildeten Konzentrats und weiterhin eine Temperaturmesseinrichtung zur Bestimmung der Temperatur T in einem Dampfraum über dem Konzentrat, wobei die mindestens eine Steuer-und/oder Regeleinheit eingerichtet ist, die Dampfzufuhrmenge gemäß einer Vorgabe der mindestens einen Recheneinheit durch Steuerung und/oder Regelung der mindestens einen Dampfzuführeinrichtung zu verändern.

Alternativ oder in Kombination zum ersten und/oder zweiten und/oder dritten Regelkreis wird vorzugsweise in einem vierten Regelkreis mindestens ein erster Parameter der Filtrationsanlage in Form der Restfeuchtigkeit des Konzentrats in Abhängigkeit eines zweiten Parameters in Form der spezifischen Filterleistung ermittelt, daraus die oder eine weitere erste Kenngröße und deren Vorzeichen ermittelt, weiterhin eine Restfeuchtigkeit des Konzentrats in Abhängigkeit einer Dicke des Konzentrats ermittelt, eine Ableitung der Restfeuchtigkeit nach der Dicke als mindestens eine zweite Kenngröße gebildet, und die Drehzahl des Vakuumfilters bei positivem Vorzeichen der ersten Kenngröße und der zweiten Kenngröße erhöht und bei negativem Vorzeichen der ersten Kenngröße und der zweiten Kenngröße vermindert.

Die Filtrationsanlage der Vorrichtung umfasst zur Bestimmung der spezifischen Filterleistung mindestens eine dritte Dosiereinrichtung zur Dosierung des Mediums in die Filterwanne und mindestens eine dritte Messeinrichtung zur Bestimmung des Füllstands an Medium in der Filterwanne, wobei die mindestens eine Steuer- und/oder Regeleinheit eingerichtet ist, den Füllstand an Medium in der Filterwanne gemäß einer Vorgabe der mindestens einen Recheneinheit durch Steuerung und/oder Regelung der mindestens einen dritten Dosiereinrichtung zu verändern.

Die Filtrationsanlage der Vorrichtung umfasst dazu weiterhin mindestens einen Antrieb für den mindestens einen Vakuumfilter und mindestens einen Drehzahlmesser zur Erfassung der Drehzahl des mindestens einen Vakuumfilters, wobei die mindestens eine Steuer- und/oder Regeleinheit eingerichtet ist, die Drehzahl gemäß einer Vorgabe der mindestens einen Recheneinheit durch Steuerung und/oder Regelung des mindestens einen Antriebs zu verändern.

Alternativ oder in Kombination zum ersten und/oder zweiten und/oder dritten und/oder vierten Regelkreis wird vorzugsweise in einem fünften Regelkreis mindestens ein erster Parameter der Filtrationsanlage in Form der Restfeuchtigkeit des Konzentrats in Abhängigkeit von der Zeit t und/oder in Form der Dichte des Filtrats in Abhängigkeit von der Zeit t ermittelt, daraus die und/oder eine weitere erste Kenngröße und deren Vorzeichen ermittelt, und von der mindestens eine Recheneinheit ein Signal zum Austausch des Filtergewebes des mindestens einen Vakuumfilters ausgegeben, wenn die und/oder die weitere erste Kenngröße ein positives Vorzeichen aufweist/aufweisen und weiterhin eine vorgegebene maximale Betriebsdauer des Filtergewebes überschritten ist.

Die mindestens eine Recheneinheit umfasst dazu bevorzugt eine Signalausgabeeinheit zur Ausgabe eines optischen und/oder akustischen Warnsignals bei einem erforderlichen Wechsel des Filtergewebes. Das Bedienpersonal der Filtrationsanlage ist anhand des Warnsignals in der Lage, das inzwischen ineffektive Filtergewebe gegen ein neues, funktionsfähiges zu ersetzen. Die maximale Betriebsdauer des Filtergewebes ist insbesondere auf der mindestens einen Recheneinheit hinterlegt.

Weiterhin hat es sich bewährt, wenn die Filtrationsanlage der Vorrichtung eine vierte Messeinrichtung zur Bestimmung einer Dicke d des gebildeten Konzentrats umfasst.

In einer bevorzugten Ausführungsform des Verfahrens werden mindestens zwei der fünf Regelkreise gleichzeitig eingesetzt, insbesondere aber alle fünf Regelkreise gleichzeitig. Das führt zu einer Vergleichmäßigung des Filtrationsprozesses und ermöglicht eine besonders effektive und energiesparende Filtrierung des Mediums bei gleichbleibender, minimaler Restfeuchtigkeit des Konzentrats.

Bevorzugt werden das erfindungsgemäße Verfahren und die Vorrichtung bei der Filtration von Erzpulpe eingesetzt.

Die Figuren 1 bis 8 sollen die Abhängigkeiten der einzelnen Parameter in einer Filtrationsanlage voneinander aufzeigen, und die Figuren 9 und 10 beispielhaft eine mögliche Vorrichtung zur Durchführung eines erfindungsgemäßen Verfahren aufzeigen. Es zeigt
- FIG 1: ein Diagramm zur qualitativen Abhängigkeit der Restfeuchtigkeit des Konzentrats von der Dichte des zu filtrierenden Mediums;
- FIG 2: ein Diagramm zur qualitativen Abhängigkeit der Dichte des zu filtrierenden Mediums von der Zeit;
- FIG 3: ein Diagramm zur qualitativen Abhängigkeit der Restfeuchtigkeit des Konzentrats vom Druck im Vakuumfilter;
- FIG 4: ein Diagramm zur qualitativen Abhängigkeit der Restfeuchtigkeit des Konzentrats von einer Temperatur T im Bereich eines Vakuumfilters;
- FIG 5: ein Diagramm zur qualitativen Abhängigkeit der Restfeuchtigkeit des Konzentrats von einer spezifischen Filterleistung;
- FIG 6: ein Diagramm zur qualitativen Abhängigkeit der Restfeuchtigkeit des Konzentrats von einer Dicke des Konzentrats auf dem Filtergewebe eines Vakuumfilters;
- FIG 7: ein Diagramm zur qualitativen Abhängigkeit der Restfeuchtigkeit des Konzentrats von einer Drehzahl des Vakuumfilters;
- FIG 8: ein Diagramm zur qualitativen Abhängigkeit der Restfeuchtigkeit des Konzentrats von einer Betriebsdauer des Filtergewebes des Vakuumfilters;
- FIG 9: eine schematische Darstellung einer Vorrichtung zur Durchführung eines erfindungsgemäßen Verfahrens; und
- FIG 10: einen Ausschnitt aus Figur 1 im Bereich der Filtrationsanlage.

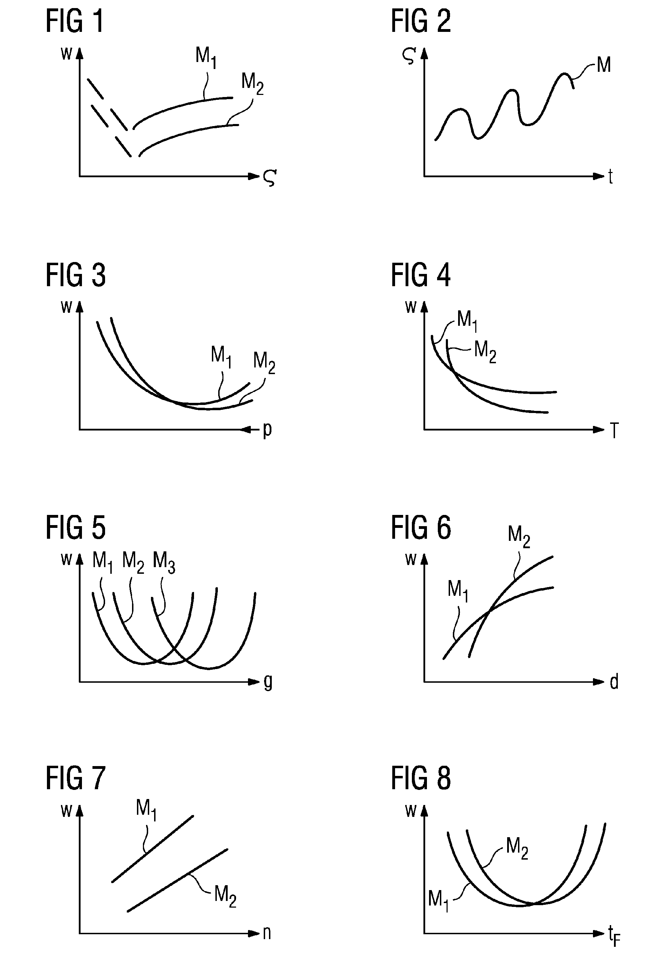

Figur 1 zeigt ein Diagramm zur qualitativen Abhängigkeit der Restfeuchtigkeit w des Konzentrats von der Dichtes 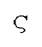 für zwei unterschiedliche zu filtrierende Medien M₁, M₂. Bei dem Medium M₁, M₂ handelt es sich insbesondere um eine Suspension, insbesondere eine Erzpulpe umfassend Gesteinspartikel und Wasser. Es ist erkennbar, dass mit zunehmender Dichte des zu filtrierenden Mediums M₁, M₂ die Restfeuchtigkeit des Konzentrats zuerst abnimmt, dann aber wieder ansteigt. Es wird daher bevorzugt in einem Bereich vor oder am Umkehrpunkt der Kurve gearbeitet, um die Restfeuchtigkeit w zu minimieren.

Figur 2 zeigt ein Diagramm zur qualitativen Abhängigkeit der Dichte 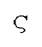 eines zu filtrierenden Mediums M über die Zeit t. Es ist erkennbar, dass die Dichtes 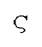 merklich schwankt und somit die erzielbare Restfeuchtigkeit w im Konzentrat (vergleiche FIG 1) beeinflusst.

Figur 3 zeigt ein Diagramm zur qualitativen Abhängigkeit der Restfeuchtigkeit w eines Konzentrats vom Vakuum bzw. Druck im Vakuumfilter für unterschiedliche zu filtrierende Medien M₁, M₂. Mit zunehmendem Druck p bzw. abnehmendem Vakuum steigt die Restfeuchtigkeit w im Konzentrat an.

Figur 4 zeigt ein Diagramm zur qualitativen Abhängigkeit der Restfeuchtigkeit w eines Konzentrats von einer Temperatur T im Bereich eines Vakuumfilters. Eine Temperaturmessung zur Bestimmung einer Temperatur T erfolgt bevorzugt in einem Gas-oder Dampfraum, der sich in Kontakt zum auf dem Filtergewebe eines Vakuumfilters gebildeten Konzentrat befindet, sobald das Konzentrat aus dem zu filtrierenden Medium M₁, M₂ austritt oder auftaucht.

Figur 5 zeigt ein Diagramm zur qualitativen Abhängigkeit der Restfeuchtigkeit w eines Konzentrats von einer spezifischen Filterleistung g für drei verschiedene Medien M₁, M₂, M₃. Bei steigender Filterleistung erreicht die Restfeuchtigkeit w ein Minimum und steigt danach wieder an. Es ist somit bevorzugt, die spezifische Filterleistung g so einzustellen, dass die Restfeuchtigkeit w sich im Bereich des Minimums befindet.

Figur 6 zeigt ein Diagramm zur qualitativen Abhängigkeit der Restfeuchtigkeit w des Konzentrats von einer Dicke d des Konzentrats auf dem Filtergewebe eines Vakuumfilters für unterschiedliche Medien M₁, M₂. Dabei steigt die Restfeuchtigkeit w im gebildeten Konzentrat bzw. Filterkuchen mit steigender Dicke des Konzentrats an.

Figur 7 zeigt ein Diagramm zur qualitativen Abhängigkeit der Restfeuchtigkeit w des Konzentrats von einer Drehzahl des Vakuumfilters für unterschiedliche Medien M₁, M₂. Je schneller sich ein Vakuumfilter dreht, desto weniger Zeit steht zur Entwässerung des Konzentrats zu Verfügung. Somit nimmt die Restfeuchtigkeit w des Konzentrats mit steigender Drehzahl n zu.

Figur 8 zeigt ein Diagramm zur qualitativen Abhängigkeit der Restfeuchtigkeit w des Konzentrats von einer Betriebsdauer t_{F} des Filtergewebes eines Vakuumfilters für unterschiedliche Medien M₁, M₂. Für ein neu eingesetztes Filtergewebe sinkt die Restfeuchtigkeit w des gebildeten Konzentrats ab. Bei einer gewissen Betriebsdauer t_{F} ist ein Minimum erreicht, ab welchem die Restfeuchtigkeit w im Konzentrat wieder ansteigt.

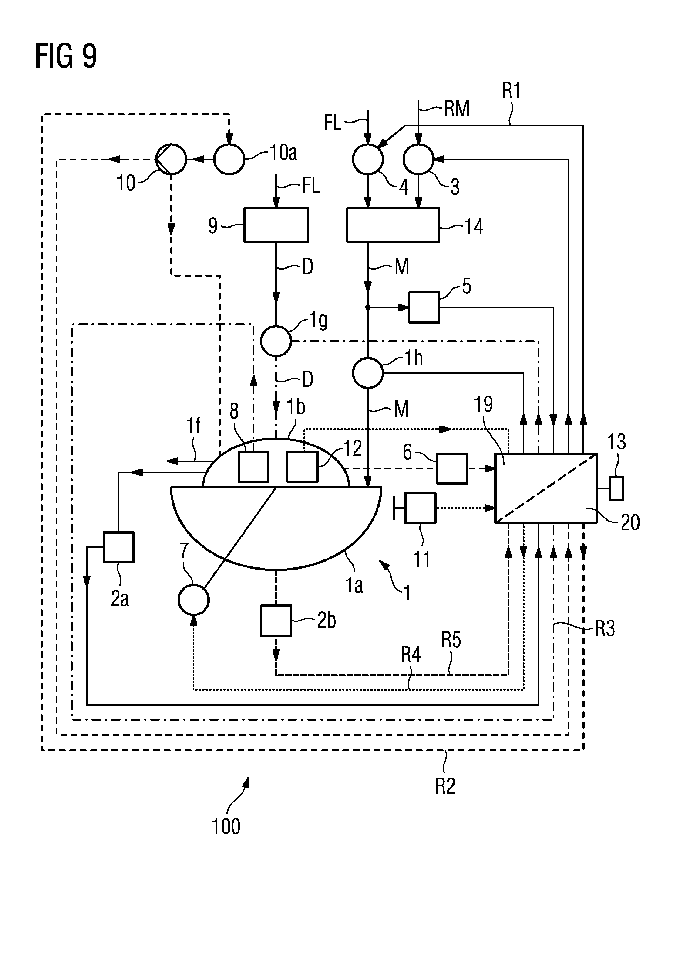

Figur 9 zeigt eine schematische Darstellung einer Vorrichtung 100 zur Durchführung eines erfindungsgemäßen Verfahrens mit insgesamt fünf möglichen Regelkreisen R₁, R2, R3, R4, R5. Es kann hier alternativ auch lediglich einer der Regelkreise oder eine Kombination von zwei bis vier der Regelkreise R₁, R2, R3, R4, R5 vorgesehen sein.

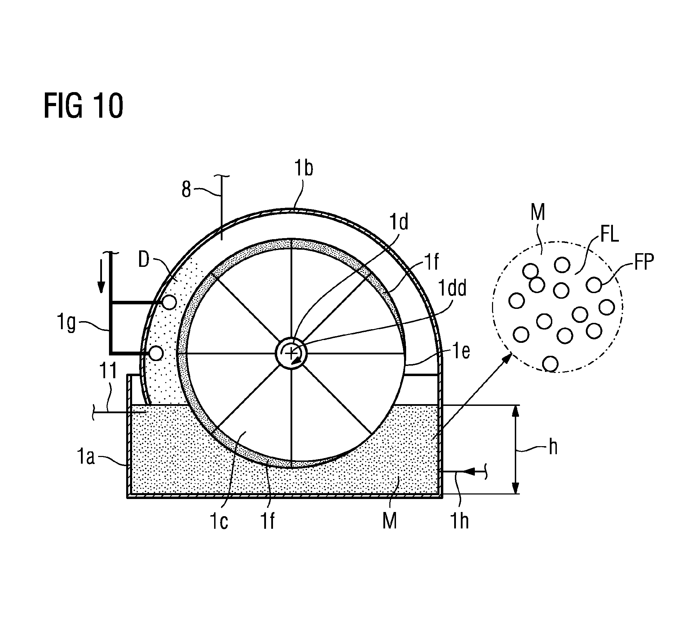

Die Vorrichtung 100 umfasst eine Filtrationsanlage 1 zur Trennung eines zu filtrierenden Mediums M (vergleiche auch FIG 10) umfassend Feststoffpartikel FP und Flüssigkeit FL in ein überwiegend Feststoffpartikel FP enthaltendes Konzentrat 1f bzw. einen Filterkuchen und ein überwiegend Flüssigkeit FL enthaltendes Filtrat. Bei dem Medium M handelt es sich insbesondere um eine Suspension, insbesondere eine Erzpulpe umfassend Gesteinspartikel als Feststoffpartikel und Wasser als Flüssigkeit.

Die Filtrationsanlage 1 umfasst hier, vergleiche auch FIG 10, eine Filterwanne 1a zur Aufnahme von zu filtrierendem Medium M, über welcher sich ein Filterzelt 1b erstreckt, und einen innerhalb des von der Filterwanne 1a und dem Filterzelt 1b umschlossenen Raums angeordneten Vakuumfilter 1c in Form eines Trommelfilters. Figur 10 zeigt eine Seitenansicht des Trommelfilters. Der Trommelfilter weist mehrere Kammern auf und ist an seinem Umfang mit einem Filtergewebe 1e bespannt. Die Filtrationsanlage 1 umfasst weiterhin eine Vakuumpumpe 10 mit Regler 10a zur Erzeugung eines Unterdrucks in den Kammern des Trommelfilters, bzw. auf einer dem Medium M abgewandten Seite des Filtergewebes 1e. Im Filtrationsprozess dreht sich der Vakuumfilter 1c um eine Drehachse 1dd, angetrieben über einen Antrieb 1d, der in FIG 10 lediglich schematisch durch den Pfeil angedeutet dargestellt ist. Der Vakuumfilter 1c taucht abschnittsweise in das Medium M ein, wobei aufgrund des Unterdrucks in den Kammern Flüssigkeit FL durch das Filtergewebe 1e gesaugt wird. Dabei bildet sich auf dem Filtergewebe 1e das Konzentrat 1f bzw. der Filterkuchen. Sobald das Konzentrat 1f aufgrund der Drehbewegung des Trommelfilters aus dem Medium M auftaucht, befindet es sich hier in einem Dampfraum, der sich zwischen dem Filterzelt 1b und dem Filtergewebe 1e erstreckt. In den Dampfraum wird mittels einer Dampfzuführeinrichtung 1g Wasserdampf D eingeleitet, welcher durch das Konzentrat 1f gesogen wird. Dabei wird eine noch im Porenraum des Konzentrats 1f enthaltene Flüssigkeitsmenge in Richtung der Kammern bzw. der Drehachse 1dd des Vakuumfilters 1c ausgetrieben und das Konzentrat 1f auf eine Restfeuchtigkeit w entwässert.

Um den Füllstand h an Medium M in der Filterwanne 1a beibehalten oder verändern zu können, ist eine dritte Dosiereinrichtung 1h vorgesehen, über die das Medium M in die Filterwanne 1a dosiert wird.

Das in die Kammern gelangende Filtrat wird im Bereich der Drehachse 1dd abgeführt, während das Konzentrat 1f vor einem erneuten Eintauchen des Filtergewebes 1e in das Medium M vom Filtergewebe 1e abgelöst und als Endprodukt ausgetragen wird. Der Übersichtlichkeit halber ist das in FIG 10 nicht im Detail dargestellt. Das Ablösen des Konzentrats 1f vom Filtergewebe 1e erfolgt beispielsweise durch einen Schaber, ein Freiblasen des Filtergewebes 1e mit Luft, usw.

Die Vorrichtung 100 umfasst weiterhin eine erste Einrichtung 2a zur Ermittlung eines ersten Parameters der Filtrationsanlage in Form einer Restfeuchtigkeit w des Konzentrats 1f und eine weitere erste Einrichtung 2b zur Ermittlung eines weiteren ersten Parameters der Filtrationsanlage in Form einer Dichte des Filtrats in Abhängigkeit von der Zeit t oder einem zweiten Parameter der Filtrationsanlage 1.

Weiterhin umfasst die Vorrichtung eine Recheneinheit 19 zum Bilden einer Ableitung der ersten Parameter nach der Zeit t oder dem zweiten Parameter unter Bildung mindestens einer ersten Kenngröße und zum Ermitteln des Vorzeichens der ersten Kenngröße(n). Die Recheneinheit 19 ist mit einer Steuer-und/oder Regeleinheit 20 der Vorrichtung 100 zum Steuern und/oder Regeln der Filtrationsanlage 1 in Abhängigkeit des ermittelten Vorzeichens verbunden. Hier ist die Recheneinheit 19 in die Steuer- und Regeleinheit 20 integriert, kann aber auch separat von dieser angeordnet sein, um beispielsweise eine Fernüberwachung der Vorrichtung 100 zu ermöglichen.

Die Filtrationsanlage 1 umfasst weiterhin eine erste Dosiereinrichtung 3 zur Dosierung eines Rohmediums RM umfassend Flüssigkeit FL und Feststoffpartikel FP und eine zweite Dosiereinrichtung 4 zur Zugabe von weiterer Flüssigkeit FL zum Rohmedium RM. Eine Homogenisierung von Rohmedium und weiterer Flüssigkeit erfolgt in einem Mischbehälter 14. Weiterhin umfasst die Filtrationsanlage 1 eine erste Messeinrichtung 5 zur Erfassung der Dichtes 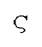 des aus dem Rohmedium RM und gegebenenfalls weiterer Flüssigkeit FL gebildeten Mediums M.

Die Steuer- und/oder Regeleinheit 20 ist eingerichtet, die Dichtes 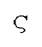 des Mediums M gemäß einer Vorgabe der mindestens einen Recheneinheit 19 durch Steuerung und/oder Regelung der ersten Dosiereinrichtung 3 und/oder der zweiten Dosiereinrichtung 4 zu verändern.

Die Filtrationsanlage 1 umfasst, neben der dritten Dosiereinrichtung 1h zur Dosierung des Mediums M in die Filterwanne 1a eine dritte Messeinrichtung 11 zur Bestimmung des Füllstands h an Medium M in der Filterwanne 1a. Die Steuer- und/oder Regeleinheit 20 ist eingerichtet, den Füllstand h an Medium M in der Filterwanne 1c gemäß einer Vorgabe der mindestens einen Recheneinheit 19 durch Steuerung und/oder Regelung der mindestens einen dritten Dosiereinrichtung 1h zu verändern.

Die Filtrationsanlage 1 umfasst außerdem eine zweite Messeinrichtung 6 zur Erfassung des Drucks p im mindestens einen Vakuumfilter 1c. Die Steuer- und/oder Regeleinheit 20 ist eingerichtet, die Pumpleistung der mindestens einen Vakuumpumpe 10 gemäß einer Vorgabe der mindestens einen Recheneinheit 19 zu verändern.

Die Filtrationsanlage 1 umfasst neben dem Antrieb 1d für den Vakuumfilter 1c einen Drehzahlregler 7 zur Regelung und Erfassung der Drehzahl n des mindestens einen Vakuumfilters 1c, wobei die mindestens eine Steuer- und/oder Regeleinheit 20 eingerichtet ist, die Drehzahl n gemäß einer Vorgabe der Recheneinheit 19 durch Steuerung und/oder Regelung des Antriebs 1d zu verändern.

Die Filtrationsanlage 1 umfasst weiterhin neben der Dampfzuführeinrichtung 1g zur Bedampfung des gebildeten Konzentrats 1f eine Temperaturmesseinrichtung 8 zur Bestimmung der Temperatur T im Dampfraum über dem Konzentrat 1f. Die Steuer-und/oder Regeleinheit 20 ist eingerichtet, die Dampfzufuhrmenge gemäß einer Vorgabe der mindestens einen Recheneinheit 19 durch Steuerung und/oder Regelung der Dampfzuführeinrichtung 1g zu verändern.

Die Recheneinheit 19 verfügt über eine Signalausgabeeinheit 13 zur Ausgabe eines optischen und/oder akustischen Warnsignals bei einem erforderlichen Wechsel des Filtergewebes 1e.

Die Filtrationsanlage 1 kann weiterhin eine vierte Messeinrichtung 12 zur Bestimmung einer Dicke d des gebildeten Konzentrats 1f umfassen.

In einem ersten Regelkreis R1 (mit einfachen Linien dargestellt) der Vorrichtung 100 wird im Filtrationsbetrieb ein erster Parameter der Filtrationsanlage 1 in Form der Restfeuchtigkeit w des Konzentrats 1f über die Zeit t mit Hilfe der ersten Einrichtung 2a ermittelt. Daraus werden mittels der Recheneinheit 19 die erste Kenngröße und ihr Vorzeichen ermittelt. Weiterhin erfolgt eine Ermittlung der Dichtes 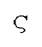 des zu filtrierenden Mediums M in Abhängigkeit der Zeit t mit Hilfe der ersten Messeinrichtung 5 und es wird mittels der Recheneinheit 19 eine Ableitung der Dichtes 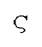 des zu filtrierenden Mediums M in Abhängigkeit der Zeit t als mindestens eine zweite Kenngröße gebildet. Bei jeweils positivem Vorzeichen der ersten Kenngröße und der zweiten Kenngröße wird die Dichtes 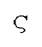 des zu filtrierenden Mediums M erhöht und bei jeweils negativem Vorzeichen der ersten Kenngröße und der zweiten Kenngröße die Dichtes 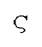 des zu filtrierenden Mediums M vermindert, indem die Dosiermengen für Flüssigkeit FL und Rohmedium RM mittels der ersten Dosiereinrichtung 3 und der zweiten Dosiereinrichtung 4 mittels der Steuer- und/oder Regeleinheit 20 entsprechend geregelt werden.

In einem zweiten Regelkreis R2 (zum Teil mit gestrichelten Linien dargestellt) der Vorrichtung 100 wird im Filtrationsbetrieb mit Hilfe der ersten Einrichtung 2a ein erster Parameter der Filtrationsanlage 1 in Form der Restfeuchtigkeit w des Konzentrats 1f in Abhängigkeit von einem zweiten Parameter in Form des Drucks p im Vakuumfilter 1c ermittelt, der mittels der zweiten Messeinrichtung 6 verfolgt erfasst. Daraus werden mittels der Recheneinheit 19 eine weitere erste Kenngröße und ihr Vorzeichen ermittelt. Bei positivem Vorzeichen der weiteren ersten Kenngröße wird eine Pumpleistung der mindestens einen Vakuumpumpe 10 über den Regler 10a erhöht und bei negativem Vorzeichen vermindert. Es erfolgt eine Rückmeldung des Istwerts der Pumpleistung an die Steuer-und/oder Regeleinheit 20.

In einem dritten Regelkreis R3 (zum Teil mit gepunkteten Linien dargestellt) der Vorrichtung 100 wird ein erster Parameter der Filtrationsanlage 1 in Form der Restfeuchtigkeit w des Konzentrats 1f mittels der ersten Einrichtung 2a in Abhängigkeit von der Temperatur T ermittelt, die über die Temperaturmesseinrichtung 8 erfasst wird. Mittels der Recheneinheit 19 werden daraus eine weitere erste Kenngröße und ihr Vorzeichen ermittelt. Bei positivem Vorzeichen der weiteren ersten Kenngröße wird die Temperatur T erhöht und bei negativem Vorzeichen vermindert, indem die Dampfzufuhr zum Konzentrat 1f über die Dampfzuführungseinrichtung 1g geregelt wird.

In einem vierten Regelkreis R4 (zum Teil mit durchgestrichenen Linien dargestellt) der Vorrichtung 100 wird ein erster Parameter der Filtrationsanlage in Form der Restfeuchtigkeit w des Konzentrats 1f mittels der ersten Einrichtung 2a in Abhängigkeit eines zweiten Parameters in Form der spezifischen Filterleistung g ermittelt. Zur Ermittlung der spezifischen Filterleistung g (beispielsweise in 1/min je m² an Filterfläche) wird die pro Zeiteinheit verarbeitete Menge an zu filtrierendem Medium M bezogen auf die Fläche des Filtergewebes 1e ermittelt. Die pro Zeiteinheit verarbeitete Menge an Medium M wird über eine Messung des Füllstands h in der Filterwanne mittels der dritten Messeinrichtung 11 über die Zeit t und die Messung der zugeführten Menge an Medium M mittels der ersten Messeinrichtung 5 in die Filterwanne 1a über die Zeit t in Kenntnis der vorhandenen Fläche an Filtergewebe 1e mittels der Recheneinheit 19 errechnet. Daraus wird eine weitere erste Kenngröße und deren Vorzeichen ermittelt, weiterhin eine Ermittlung der Restfeuchtigkeit w des Konzentrats 1f in Abhängigkeit einer Dicke d des Konzentrats vorgenommen. Die Dicke d des Konzentrats 1f wird mittels einer vierten Messeinrichtung 12 der Filtrationsanlage 1 erfasst und an die Recheneinheit 19 übermittelt und eine Ableitung der Restfeuchtigkeit w nach der Dicke d als eine zweite Kenngröße gebildet. Die Drehzahl n des Vakuumfilters 1c wird am Antrieb 1d mittels des Drehzahlreglers 7 bei positivem Vorzeichen der ersten Kenngröße und der zweiten Kenngröße erhöht und bei negativem Vorzeichen der ersten Kenngröße und der zweiten Kenngröße vermindert.

In einem fünften Regelkreis R5 (zum Teil mit gewellten Linien dargestellt) der Vorrichtung 100 wird ein erster Parameter der Filtrationsanlage in Form der Restfeuchtigkeit w des Konzentrats 1f mittels der ersten Einrichtung 2a in Abhängigkeit von der Zeit t und in Form der Dichte des Filtrats mittels der weiteren ersten Einrichtung 2b in Abhängigkeit von der Zeit t ermittelt. Daraus werden in der Recheneinheit 19 weitere erste Kenngrößen und deren Vorzeichen ermittelt. Von der Recheneinheit 19 wird dann ein Signal zum Austausch des Filtergewebes 1e des Vakuumfilters 1c ausgegeben, wenn mindestens eine dieser weiteren ersten Kenngrößen ein positives Vorzeichen aufweist und weiterhin eine vorgegebene maximale Betriebsdauer T_{Fmax} des Filtergewebes 1e überschritten ist. Dabei kann es sich um ein optisches und/oder akustisches Warnsignal handeln, das über die Signalausgabeeinheit 13 der Recheneinheit 19 ausgegeben wird und das Bedienpersonal zum Wechsel des Filtergewebes 1e veranlasst.

Es ist für einen Fachmann offensichtlich, dass die fünf beispielhaft gezeigten Regelkreise allein oder in beliebiger Kombination genutzt werden können, um die Restfeuchtigkeit w im gebildeten Konzentrat zu vermindern bzw. zu minimieren. Selbstverständlich können von einem Fachmann auch andere Typen von Vakuumfiltern problemlos für das erfindungsgemäße Verfahren oder die erfindungsgemäße Vorrichtung eingesetzt werden.

## Patentansprüche

1. Verfahren zur Steuerung und/oder Regelung einer Filtrationsanlage (1) umfassend mindestens einen Vakuumfilter (1c), mindestens eine Vakuumpumpe (10) und mindestens eine Filterwanne (1a), mittels welcher ein zu filtrierendes Medium (M) umfassend Feststoffpartikel (FP) und Flüssigkeit (FL) in ein überwiegend Feststoffpartikel (FP) enthaltendes Konzentrat (1f) und ein überwiegend Flüssigkeit (FL) enthaltendes Filtrat getrennt wird, umfassend folgende Schritte:
- Ermittlung mindestens eines ersten Parameters der Filtrationsanlage (1) in Form einer Restfeuchtigkeit (w) des Konzentrats (1f) und/oder einer Dichte des Filtrats in Abhängigkeit von einer Zeit t oder mindestens einem zweiten Parameter der Filtrationsanlage (1),
- Bilden einer Ableitung des mindestens einen ersten Parameters nach der Zeit t oder dem mindestens einen zweiten Parameter als mindestens eine erste Kenngröße,
- Ermitteln des Vorzeichens der mindestens einen ersten Kenngröße, und
- Steuern und/oder Regeln der Filtrationsanlage (1) in Abhängigkeit des ermittelten Vorzeichens.

2. Verfahren nach Anspruch 1, wobei der mindestens eine zweite Parameter aus der Gruppe umfassend
- eine Dichte ( 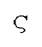 ) des zu filtrierenden Mediums (M),
- einen Druck (p) im Vakuumfilter (1c),
- eine Drehzahl (n) des Vakuumfilters (1c),
- eine Temperatur T im Bereich des Vakuumfilters (1c),
- eine Dicke (d) des Konzentrats (1f),
- eine maximale Betriebsdauer eines Filtergewebes (1e) des Vakuumfilters (1c),
- eine spezifische Filterleistung (g), und
- einen Füllstand (h) in der Filterwanne (1a), ausgewählt wird.

3. Verfahren nach Anspruch 2, wobei mindestens ein erster Parameter der Filtrationsanlage (1) in Form der Restfeuchtigkeit (w) des Konzentrats (1f) über die Zeit t ermittelt wird, daraus die erste Kenngröße und ihr Vorzeichen ermittelt werden, eine Ermittlung der Dichte ( 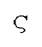 ) des zu filtrierenden Mediums (M) in Abhängigkeit der Zeit t erfolgt und eine Ableitung der Dichte ( 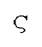 ) des zu filtrierenden Mediums (M) in Abhängigkeit der Zeit t als mindestens eine zweite Kenngröße gebildet wird, wobei bei jeweils positivem Vorzeichen der ersten Kenngröße und der zweiten Kenngröße die Dichte ( 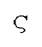 ) des zu filtrierenden Mediums (M) erhöht und bei jeweils negativem Vorzeichen der ersten Kenngröße und der zweiten Kenngröße die Dichte ( 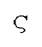 ) des zu filtrierenden Mediums (M) vermindert wird.

4. Verfahren nach einem der Ansprüche 2 oder 3, wobei mindestens ein erster Parameter der Filtrationsanlage (1) in Form der Restfeuchtigkeit (w) des Konzentrats (1f) in Abhängigkeit von einem zweiten Parameter in Form des Drucks (p) im Vakuumfilter (1c) ermittelt wird, daraus die oder eine weitere erste Kenngröße und ihr Vorzeichen ermittelt werden, und wobei bei positivem Vorzeichen der bzw. der weiteren ersten Kenngröße eine Pumpleistung der mindestens einen Vakuumpumpe (10) erhöht und bei negativem Vorzeichen vermindert wird.

5. Verfahren nach einem der Ansprüche 2 bis 4, wobei das auf dem Filtergewebe (1e) des Vakuumfilters (1c) gebildete Konzentrat (1f) mit Wasserdampf (D) beaufschlagt wird und weiterhin die Temperatur T in einem Dampfraum über dem Konzentrat (1f) gemessen und durch Erhöhung oder Verringerung einer zugeführten Wasserdampfmenge geregelt wird.

6. Verfahren nach Anspruch 5, wobei mindestens ein erster Parameter der Filtrationsanlage (1) in Form der Restfeuchtigkeit (w) des Konzentrats (1f) in Abhängigkeit von der Temperatur T ermittelt wird, daraus die oder eine weitere erste Kenngröße und ihr Vorzeichen ermittelt werden, und wobei bei positivem Vorzeichen der oder der weiteren ersten Kenngröße die Temperatur T erhöht und bei negativem Vorzeichen die Temperatur T vermindert wird.

7. Verfahren nach einem der Ansprüche 2 bis 6, wobei mindestens ein erster Parameter der Filtrationsanlage (1) in Form der Restfeuchtigkeit (w) des Konzentrats (1f) in Abhängigkeit eines zweiten Parameters in Form der spezifischen Filterleistung (g) ermittelt wird, daraus die oder eine weitere erste Kenngröße und deren Vorzeichen ermittelt werden, weiterhin eine Ermittlung der Restfeuchtigkeit (w) des Konzentrats (1f) in Abhängigkeit einer Dicke (d) des Konzentrats (1f) erfolgt, eine Ableitung der Restfeuchtigkeit (w) nach der Dicke (d) als mindestens eine zweite Kenngröße gebildet wird, und wobei die Drehzahl (n) des Vakuumfilters (1c) bei positivem Vorzeichen der ersten Kenngröße und der zweiten Kenngröße erhöht und bei negativem Vorzeichen der ersten Kenngröße und der zweiten Kenngröße vermindert wird.

8. Verfahren nach einem der Ansprüche 2 bis 7, wobei mindestens ein erster Parameter der Filtrationsanlage (1) in Form der Restfeuchtigkeit (w) des Konzentrats (1f) in Abhängigkeit von de Zeit t und/oder in Form der Dichte des Filtrats in Abhängigkeit von der Zeit t ermittelt werden, daraus die und/oder eine weitere erste Kenngröße und deren Vorzeichen ermittelt werden, und von der mindestens eine Recheneinheit (19) ein Signal zum Austausch des Filtergewebes (1e) des mindestens einen Vakuumfilters (1c) ausgegeben wird, wenn die und/oder die weitere erste Kenngröße ein positives Vorzeichen aufweist/aufweisen und weiterhin eine vorgegebene maximale Betriebsdauer des Filtergewebes (1e) überschritten ist.

9. Vorrichtung zur Durchführung eines Verfahrens nach einem der Ansprüche 1 bis 8, umfassend
- eine Filtrationsanlage (1) zur Trennung eines zu filtrierenden Mediums (M) umfassend Feststoffpartikel (FP) und Flüssigkeit (FL) in ein überwiegend Feststoffpartikel (FP) enthaltendes Konzentrat (1f) und ein überwiegend Flüssigkeit (FL) enthaltendes Filtrat, umfassend mindestens einen Vakuumfilter (1c), mindestens eine Vakuumpumpe (10) und mindestens eine Filterwanne (1a) zur Aufnahme von zu filtrierendem Medium (M),
- mindestens eine erste Einrichtung (2a, 2b) zur Ermittlung mindestens eines ersten Parameters der Filtrationsanlage (1) in Form einer Restfeuchtigkeit (w) des Konzentrats (1f) und/oder einer Dichte des Filtrats in Abhängigkeit von der Zeit t oder dem mindestens einen zweiten Parameter,
- mindestens eine Recheneinheit (19) zum Bilden einer Ableitung des mindestens einen ersten Parameters nach der Zeit t oder dem mindestens einen zweiten Parameter als mindestens eine erste Kenngröße und zum Ermitteln des Vorzeichens der mindestens einen ersten Kenngröße, und
- mindestens eine, mit der mindestens einen Recheneinheit (19) verbundene Steuer- und/oder Regeleinheit (20) zum Steuern und/oder Regeln der Filtrationsanlage (1) in Abhängigkeit des ermittelten Vorzeichens.

10. Vorrichtung nach Anspruch 9, wobei die Filtrationsanlage (1) mindestens eine erste Dosiereinrichtung (3) zur Dosierung eines Rohmediums (RM) umfassend Flüssigkeit (FL) und Feststoffpartikel (FP) und mindestens eine zweite Dosiereinrichtung (4) zur Zugabe von weiterer Flüssigkeit (FL) zum Rohmedium (RM) umfasst, weiterhin eine erste Messeinrichtung (5) zur Erfassung der Dichte des aus dem Rohmedium (RM) und gegebenenfalls der weiteren Flüssigkeit (FL) gebildeten zu filtrierenden Mediums (M) umfasst, und wobei die mindestens eine Steuer- und/oder Regeleinheit (20) eingerichtet ist, die Dichte ( 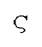 ) des Mediums (M) gemäß einer Vorgabe der mindestens einen Recheneinheit (19) durch Steuerung und/oder Regelung der mindestens einen ersten Dosiereinrichtung (3) und/oder der mindestens einen zweiten Dosiereinrichtung (4) zu verändern.

11. Vorrichtung nach einem der Ansprüche 9 oder 10, wobei die Filtrationsanlage (1) mindestens eine dritte Dosiereinrichtung (1h) zur Dosierung des Mediums (M) in die Filterwanne (1a) und mindestens eine dritte Messeinrichtung (11) zur Bestimmung des Füllstands (h) an Medium (M) in der Filterwanne (1a) umfasst, und wobei die mindestens eine Steuer- und/oder Regeleinheit (20) eingerichtet ist, den Füllstand (h) an Medium (M) in der Filterwanne (1a) gemäß einer Vorgabe der mindestens einen Recheneinheit (19) durch Steuerung und/oder Regelung der mindestens einen dritten Dosiereinrichtung (1h) zu verändern.

12. Vorrichtung nach einem der Ansprüche 9 bis 11, wobei die Filtrationsanlage (1) eine zweite Messeinrichtung (6) zur Erfassung des Drucks (p) im mindestens einen Vakuumfilter (1c) umfasst, und wobei die mindestens eine Steuer- und/oder Regeleinheit (20) eingerichtet ist, die Pumpleistung der mindestens einen Vakuumpumpe (10) gemäß einer Vorgabe der mindestens einen Recheneinheit (19) zu verändern.

13. Vorrichtung nach einem der Ansprüche 9 bis 12, wobei die Filtrationsanlage (1) mindestens einen Antrieb (1d) für den mindestens einen Vakuumfilter (1c) und mindestens einen Drehzahlregler (7) zur Erfassung und Regelung der Drehzahl (n) des mindestens einen Vakuumfilters (1c) umfasst, und wobei die mindestens eine Steuer- und/oder Regeleinheit (20) eingerichtet ist, die Drehzahl (n) gemäß einer Vorgabe der mindestens einen Recheneinheit (19) durch Steuerung und/oder Regelung des mindestens einen Antriebs (1d) zu verändern.

14. Vorrichtung nach einem der Ansprüche 9 bis 13, wobei die Filtrationsanlage (1) mindestens eine Dampfzuführeinrichtung (1g) zur Bedampfung des gebildeten Konzentrats (1f) und weiterhin eine Temperaturmesseinrichtung (8) zur Bestimmung der Temperatur T in einem Dampfraum über dem Konzentrat (1f) umfasst, und wobei die mindestens eine Steuer- und/oder Regeleinheit (20) eingerichtet ist, die Dampfzufuhrmenge gemäß einer Vorgabe der mindestens einen Recheneinheit (19) durch Steuerung und/oder Regelung der mindestens einen Dampfzuführeinrichtung (1g) zu verändern.

15. Vorrichtung nach einem der Ansprüche 9 bis 14, wobei die mindestens eine Recheneinheit (19) eine Signalausgabeeinheit (13) zur Ausgabe eines optischen und/oder akustischen Warnsignals bei einem erforderlichen Wechsel des Filtergewebes (1e) umfasst.

16. Vorrichtung nach einem der Ansprüche 9 bis 15, wobei die Filtrationsanlage (1) weiterhin eine vierte Messeinrichtung (12) zur Bestimmung einer Dicke (d) des gebildeten Konzentrats (1f) umfasst.
